# EUROPEAN PATENT SPECIFICATION

(11) **EP 0 668 003 B1**
(45) Date of publication and mention of the grant of the patent: **17.02.1999**
(21) Application number: 94900299.2
(22) Date of filing: 09.11.1993
(51) Int. Cl.: H04N 5/782

(54) **METHOD AND APPARATUS FOR PREPROGRAMMING A VIDEO CASSETTE RECORDER**
VERFAHREN UND GERÄT ZUM VORPROGRAMMIEREN EINES VIDEOREKORDERS
PROCEDE ET APPAREIL DE PREPROGRAMMATION D'UN MAGNETOSCOPE

(30) Priority: 09.11.1992 KR 9220954
(43) Date of publication of application: 23.08.1995
(73) Proprietor: DAEWOO ELECTRONICS CO., LTD, Jung-Gu, Seoul 100-095 (KR)
(72) Inventor: KIM, Jae Key, Nowon-ku, Seoul 139-210 (KR); PARK, Keun, Seoul 132-104 (KR); CHEON, Byeong Hoo, Seoul 140-140 (KR)
(74) Representative: Turi, Michael, Dipl.-Phys.
(86) International application number: KR9300100
(87) International publication number: WO9411990

(56) References cited:
- EP-A- 0 322 909
- EP-A- 0 371 749
- WO-A-90/16088
- DE-C- 3 716 319
- US-A- 5 047 867
- US-A- 5 099 364

## Description

### TECHNICAL FIELD OF THE INVENTION

The present invention relates to a video cassette recorder ("VCR") having a capability of performing timer-controlled preprogramming in a simple and efficient manner.

### BACKGROUND ART

Nowadays, most VCRs are provided with the capability of recording a desired television broadcast program at a designated time for a certain duration under the control of a timer. In order to set up the VCR to record the desired TV broadcast program in advance, various preprogramming information must be inputted through a series of operations which may comprise: fixing time data in the order of month, day and year in the timer to designate when the recording of the desired program is to be carried out; setting a recording start time and a recording end time; selecting any one of tape running speeds, i.e., "SP(Standard Playback)", "LP(Long Playback)" and "EP(Extended Playback)"; selecting a TV channel through which the desired broadcast program is to be received; and then pressing a RECORD key on the VCR or a remote control unit.

If any of the operations is erroneously carried out, the desired broadcast program cannot be recorded correctly; and, the above series of complex operations makes the prior art method rather vulnerable to such an error.

In order to simplify and accurately perform the timer-controlled preprogramming, therefore, there are proposed several techniques in the art, including the one disclosed in WO-A-90/017844, wherein the task of preprogramming is simplified through the use of encoded information which is referred to as a "G-code" made of, e.g., 7 digits. This method of preprogramming is accomplished by looking up a G-code printed in a TV program guide and entering the G-code instead of the channel, date, time and length (CDTL) data. When the G-code is entered, it is converted into the CDTL information by a G-code decoder incorporated in the VCR.

While the G-code method is capable of providing a shortened preprogramming precedure, it suffers from a lack of flexibility as its utility entirely depends on the availability and accuracy printed in the media. Furthermore, should there be a change in the printed television program, the given G-code cannot be used.

On the other hand, the VCR may be subjected to a power failure, or may be deplugged or disconnected from the power source by the user. Against these situations, particularly in preparation for the power failure, most VCRs having a timer-controlled preprogramming feature are provided with means, e.g., a capacitor, for keeping alive the timer and the preprogramming information stored in a memory which can be erased at the time of power failure. However, since the duration of information compensation by the capacitor is confined to a short period of time, e.g., one or two hours, a discontinuation of power supply for a longer while than the compensation duration may result in the loss of the stored information.

### DISCLOSURE OF THE INVENTION

The object of the invention is to provide an improved VCR capable of performing timer-controlled preprogramming in a simplified and flexible manner.

The invention is as defined in the independent claims.

The present invention concerns a preprogramming apparatus capable of recording a desired TV broadcast program in a simplified fashion. Specifically, the preprogramming apparatus sets up a set of initial preprogramming information including a recording channel, a predetermined recording tape speed, a recording start time and a recording end time necessary to record the desired TV program, wherein the initial recording channel is set to a channel through which a broadcast program is currently received, the initial recording start time is set to a current time indicated on a timer, and the initial recording end time is set to a time determined by adding a predetermined period of time to the recording start time. In acorrdance with the present invention, when necessary, it is possible to update the recording start time to the actual start time of the desired program, the recording end time, the recording tape speed, and the recording channel. Further, a back-up battery may be provided to save the time data set up in the timer and the preprogramming information stored in the memory in case of an electricity failure.

### BRIEF DESCRIPTION OF THE DRAWINGS

The above and other objects and features of the present invention will become apparent from the following description of preferred embodiments with reference to the accompanying drawings, in which:
Fig. 1 is a schematic block diagram of a VCR capable of performing timer preprogramming in accordance with the present invention;
Figs. 2 is a plan view of a remote control unit which produces operation signals to the system controller shown in Fig. 1;
Figs. 3, 4, 5 and 6 are flow charts illustrating the operation of the system controller shown in Fig. 1, respectively; and
Figs. 7A, 7B and 7C are display patterns developed on a screen during the timer preprogramming.

### MODES OF CARRYING OUT THE INVENTION

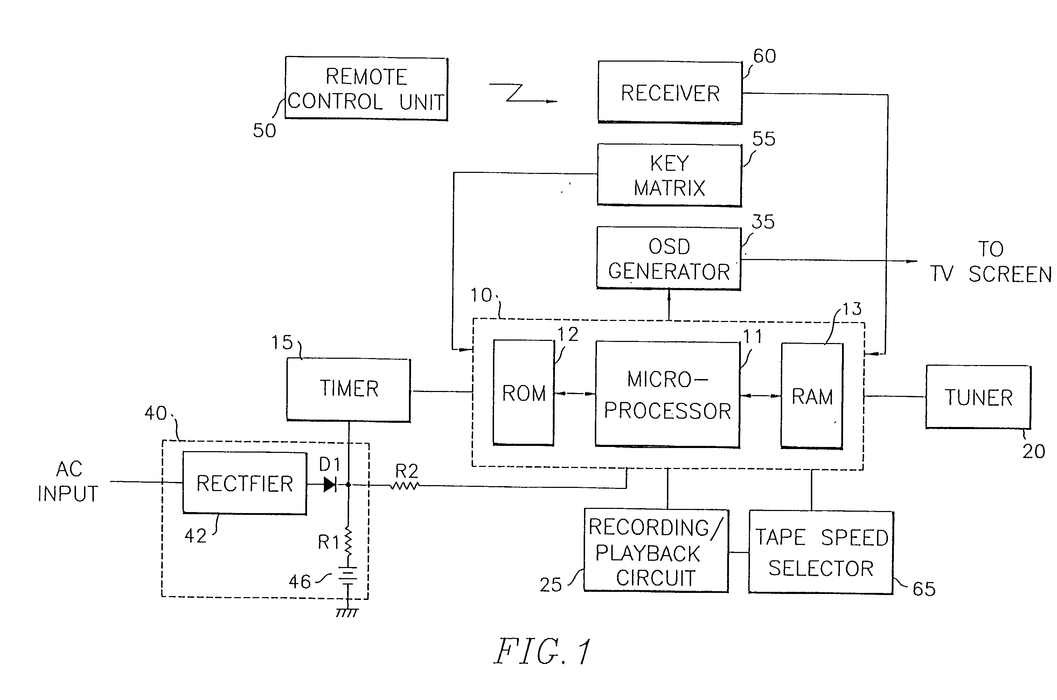

Referring to Fig. 1, there is shown a VCR having basic components required to carry out timer-controlled preprogramming in accordance with the present invention. They are: a system controller 10, a timer 15, a tuner 20, a recording/playback circuit 25, an OSD (on screen display) generator 35, a key matrix 55 and a receiver 60.

The system controller 10, which may be implemented with a microcomputer, includes a microprocessor 11, a read only memory (ROM) 12 in which various programs are stored, a random access memory (RAM) 13 to store data and preprogramming information that may be changed or updated during the operation of the microprocessor 11, and an input/output port(not shown).

The timer 15 includes a real time clock which is normally provided in the VCR to offer time and date information. The tuner 20 is provided with necessary circuits for receiving a TV broadcast program in a known manner. Under the control of the system controller 10, any one of the broadcast programs selected by the tuner 20 can be reserved or preset for preprogrammed recording.

The recording/playback apparatus 25 connected to the system controller 10 employs a mechanism which performs various mechanical functions for the VCR. The mechanical functions may include loading and unloading of a videotape, recording of video signals on the tape, reproduction of the video signals recorded on the videotape and the like.

The OSD generator 35 generates display patterns for the display of preprogramming information on a television screen (not shown) which may be conventionally connected to the VCR in accordance with a display algorithm which prompts the user to enter the preprogramming data through the operation of the keys on the remote control unit 50 or on the key matrix 55.

The key matrix 55 built in the VCR may have a number of keys which may be the same as those in the remote control unit 50 which will be fully discussed hereinafter.

A tape speed selector 65, which may be coupled to a capstan motor for controlling the tape speed, serves to select any one mode of the available tape running speeds such as SP, LP and EP modes under a control of the system controller 10.

Connected to the system controller 10 is the receiver 60 which receives a command signal transmitted from the remote control unit 50 and converts it to an electrical signal for the system controller 10.

In accordance with the present invention, built in the VCR may be an auxiliary voltage supply 40, which is coupled to a main power supply (for the sake of simplicity, the main power supply is omitted in Fig. 1), for use to compensate an interruption of power supply in the event of, e.g., a power failure. The auxiliary voltage supply 40 includes a rectifier 42 to rectify an AC input to the VCR, a reverse current blocking diode D1 connected to the rectifier 42, a rechargeable battery 46 and an overcharge prevention resistor R1 for the rechargeable battery 46. The rechargeable battery 46, which may be of a nickel-cadmium (NiCd) battery, is actuated at a time when the AC input is interrupted due to the power failure or disconnection and maintains the timer 15 and the system controller 10 to save the time data in the timer 15 and the preprogramming information stored in the RAM 13.

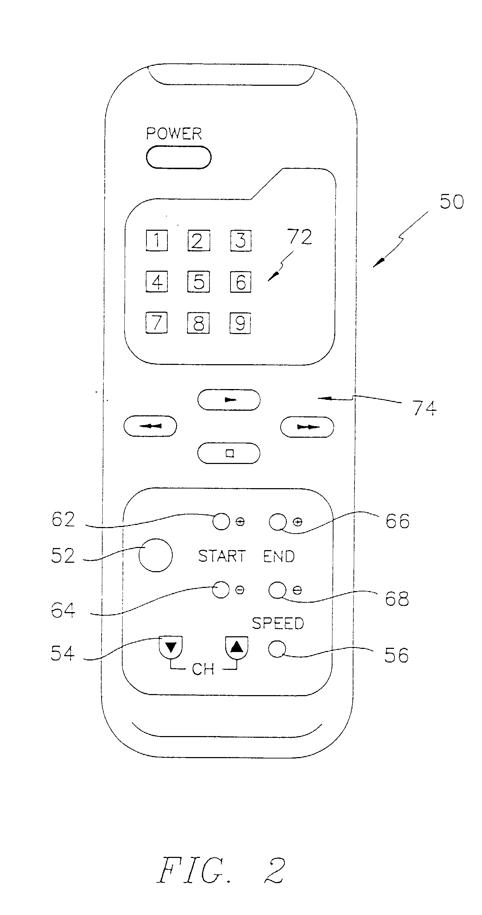

As clearly shown in Fig. 2, the remote control unit 50 has a reservation key 52, a channel selection key 54, a tape speed selection key 56 and updating keys including a recording start time increment(+) and decrement(-) keys 62 and 64 and a recording end time increment(+) and decrement(-) keys 66 and 68 together with a plurality of such other keys as numeric keys 72 and operation keys 74.

The reservation key 52 functions to generate a signal indicative of the recording commencement or completion when it is pressed. In response to the recording commencement signal generated when the reservation key 52 is operated, the system controller 10 simultaneously sets up or "initializes" the preprogramming information including a recording channel, a tape speed, a recording start time and a recording end time, as follows: the initial recording channel is set to the channel of a broadcast program currently received by the tuner 20, the initial tape speed is set to any one of the available tape speeds such as SP, LP and EP modes, and the initial recording start time is set to a current time indicated on the timer 15. And the initial recording end time is set to a time that is defined by adding a predetermined duration of recording to the recording start time.

While the initialization is carried out by simply pressing the reservation key 52 once, it may be necessary to individually fit or adjust the initial recording start time and the initial recording end time to the actual broadcast schedule of a desired broadcast program for recording. The recording start time and the recording end time can be updated or adjusted through the use of the start time increment(+)/ decrement(-) keys 62 and 64 and the end time increment(+)/ decrement(-) keys 66 and 68, respectively. The start time increment(+) key 62 is used to delay the recording start time from the current time, while the start time decrement(-) key 64 is used to step up the delayed recording start time. That is, the start time decrement(-) key 64 may be used to reverse or correct the start time erroneously delayed by the operation of the start time increment(+) key 62. Thereafter, the recording end time will be automatically adjusted or updated to a new end time defined by the predetermined duration of recording (T1) added to the updated start time.

Or, the end time adjustment keys including the end time increment(+) and decrement(-) keys 66 and 68 may be employed to further adjust the recording end time to an actual end time of the desired broadcast program.

Further, it is possible to update the recording channel and the tape speed through the use of the channel selection key 54 and the tape speed selection key 56 as well known in the art, respectively.

After updating the recording start time, end time, channel and tape speed, the reservation key 52 is pressed once again so as to signify the completion of the preprogramming process in accordance with the present invention.

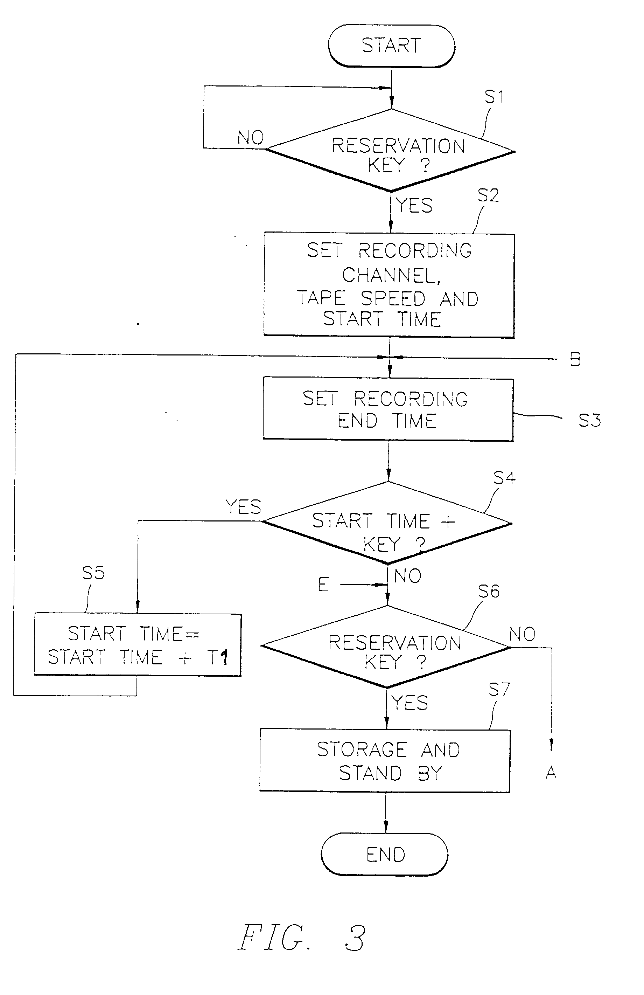

The simplified recording operation described above will now be explained in further details with reference to Figs. 3 to 6.

As shown in Fig. 3, the simplified recording process in accordance with the invention directly begins by simply pressing the reservation key 52. When the reservation key 52 is pressed in step S1, the process proceeds to step 52 where the system controller 10 "initializes" the preprogramming information including the recording channel, the tape speed and the recording start time. The initial recording channel will be a channel through which a TV program is being currently received by the tuner 20, the initial recording tape speed will be any one of the tape speeds, for example, LP mode, and the initial recording start time will be the current time which is read from the timer 15.

And then, the process proceeds to step S3, wherein the system controller 10 sets the recording end time by adding the predetermined duration of recording (T1) to the initial start time. The predetermined duration of recording (T1) may correspond to a program length, e.g., two hours.

As described above, it should be appreciated that the initialization of the preprogramming information is automatically done by simply pressing the reservation key 52 once. The above procedure helps to save the time needed to input four or more pieces of preprogramming information as is done in other types of VCR systems.

Since it is not possible to record a desired program to be broadcast in a future with the recording start time set to the current time, the initial preprogramming information in such case is, therefore, updated in accordance with the following procedure. In step S4, it is determined whether the start time increment(+) key 62 has been pressed. If positive, the process goes to step S5. In step S5, the start time is incremented by a time interval (T2) each time the start time increment(+) key 62 is pressed until it reaches the desired start time.

After adjusting the start time in step S5, the process returns to step S3 where the updated end time is determind by adding the predetermined duration of recording (T1) to the updated start time.

In step S4, if it is determined that the start time increment (+) key 62 has not been pressed, the process proceeds to step 56. In step S6, the system controller 10 determines whether the reservation key 52 has been pressed or not. If positive, the process proceeds to step 57. If it has not been pressed, the process passes to step S8 through a tab A.

In step S7, in response to the preprogramming completion signal generated by the operation of the reservation key 52 a second time, the system controller 10 stores the preprogramming information including the updated start time, the updated end time, the channel and the tape speed in the RAM 13. Consequently, the preprogrammed recording procedure in accordance with the present invention may be economically accomplished with only the three steps of operation by pressing the reservation key 52, the start time updating key 62, and again the reservation key 52, in that order.

As described above, the start time is updated with the operation of the start time increment(+) key 62. However, in case where the updated start time is past the time to commence the recording of the desired broadcast program, it will be required to reverse the late start time.

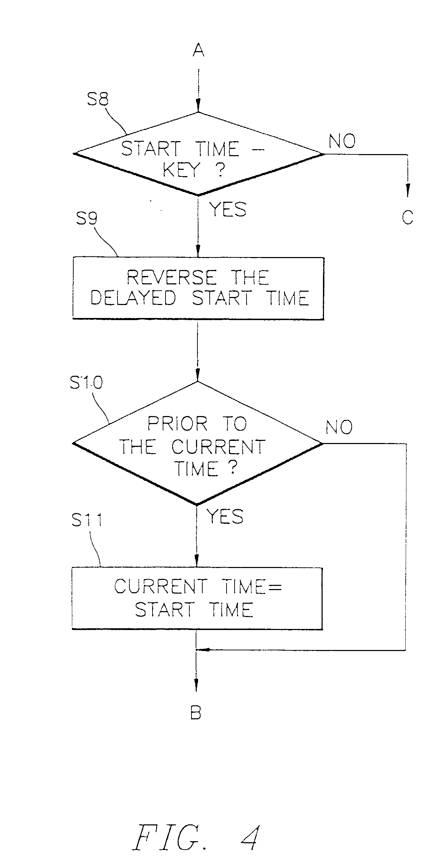

Fig. 4 is a flow chart illustrating the procedure to restore or reverse the late start time.

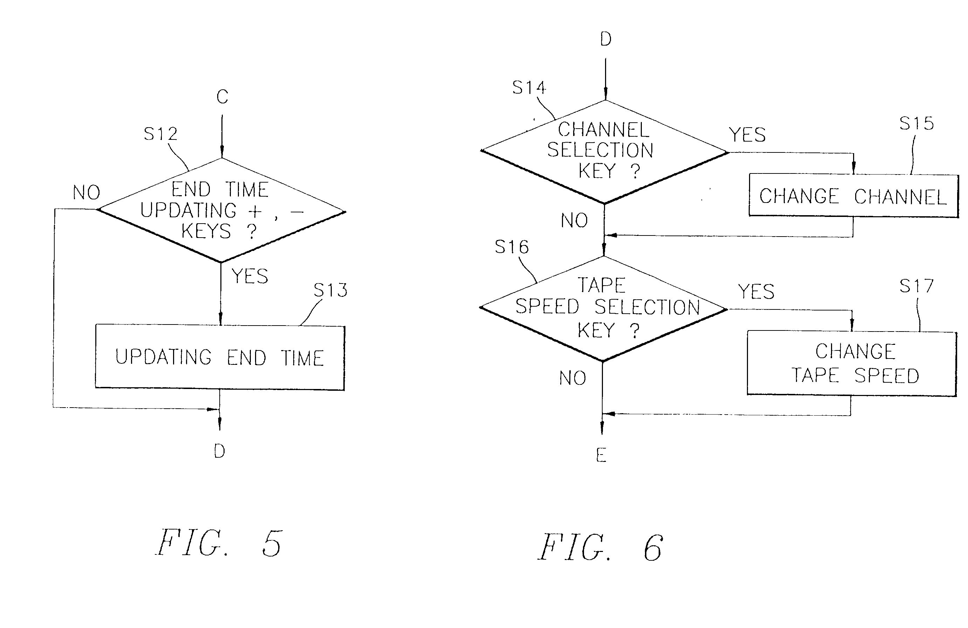

In step S8, the system controller 10 determines whether the start time decrement(-) key 64 has been pressed or not. If not, the process proceeds to step S12 in Fig. 5 through a tab C. However, if the start time decrement(-) key 64 has been pressed, the process proceeds to step S9 to back up or reverse the start time by a time interval (T3) each time the start time decrement (-) key 64 is pressed. It may be desirable to program the time intervals (T2 and T3) to be several minutes, for example, 5 and 3 minutes respectively, for the purpose of a quick adjustment.

However, in case where the reversed start time in step S9 is earlier than the current time indicated on the timer 15, the preprogrammed recording cannot be accomplished. Therefore, the start time should be set to the current time read from the timer 15, or to a later time.

Accordingly, in step S10, it is checked whether the reversed start time is earlier than the current time. If not, the process returns to step S3 through the tap B. Otherwise, the process proceeds to step S11 where the system controller 10 sets the current time indicated on the timer 15 as the recording start time and then the process returns to step 53 through the tab B.

If necessary, it is also possible in step 11 to set the start time to the updated start time as in step S5.

On the other hand, as described in step S3, there is always the predetermined duration of recording (T1) between the recording start time and the recording end time. Thus, there is no problem if the predetermined duration of recording (T1) is equal to the length of the desired broadcast program.

However, if the predetermined duration of recording (T1) is different from the length of the desired broadcast program, the end time increment(+) and decrement (-) keys 66 and 68 are used to adjust the recording end time to an actual end time of the desired broadcast program. A flow chart for the adjustment of the recording end time is shown in Fig. 5.

In step S12, the system controller 10 checks whether the end time increment (+) key 66 or decrement (-) key 68 has been pressed or not. If the increment (+) key 66 or decrement (-) key 68 has been pressed, the process proceeds to step S13; otherwise, the process flows to step S14 through a tab D. In step S13, the end time is increased or decreased by a time interval (T4) upon the pressing of the end time increment (+) key 66 or the end time decrement (-) key 68. In accordance with a preferred embodiment of the present invention, it is desirable to program the time interval (T2 or T3) used to adjust the recording start time to be more precise or finer than the time interval (T4) used to adjust the recording end time.

Turning now to Fig. 6, there is shown a flow chart for updating the channel and the tape speed. In step S14, the system controller 10 checks whether the channel selection key 54 has been pressed. When pressed, the system controller 10 causes the tuner 20 to change the recording channel to another channel in step S15. Alternatively, the numeric key 72 may be used to directly select the recording channel as well known in the art.

In step S14, if the key 54 has not been pressed, the process proceeds to step S16 and the system controller 10 checks whether the tape speed selection key 56 has been pressed or not.

In step S16, if the speed selection key 56 has been pressed, the process proceeds to step S17 and the system controller 10 causes the tape speed selector 60 to change the tape speed to another speed. If the speed selection key 56 has not been pressed, the process returns to step S6 through the tab E and the entire procedure for timer-controlled preprogramming becomes completed by pressing the reservation key 52 once again. At the same time, all of the newly updated preprogramming information is stored in the RAM 13; and the VCR enters into a stand-by mode until the recording starts.

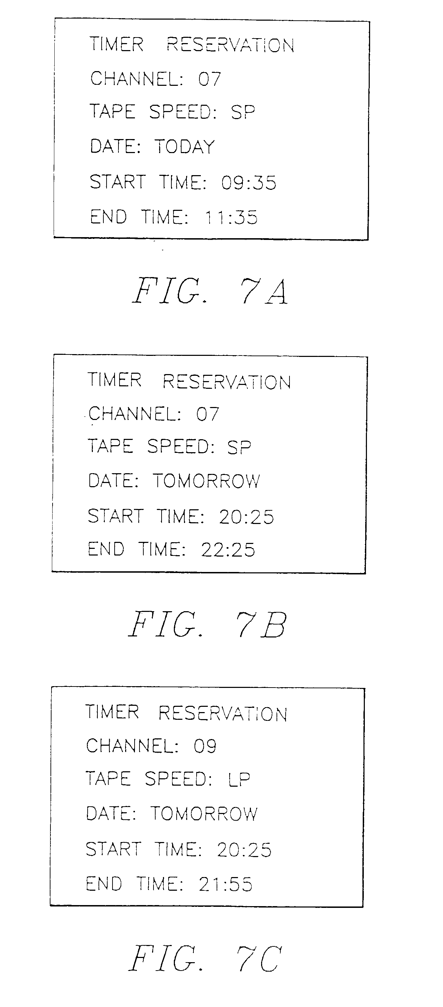

Fig. 7 exemplifies display patterns which may be displayed on the television screen by the OSD generator 35.

The system controller 10 controls the OSD generator 35 to generate an OSD signal corresponding to an original display pattern including such letters as TIMER RESERVATION, CHANNEL, TAPE SPEED, DATE, START TIME and END TIME in the order shown in Fig. 7A when the reservation key 52 is pressed as in step S1(see Fig. 3).

Fig. 7B shows an exemplary display pattern generated when the start time increment(+) key 62 is pressed as in step S4, indicating that the date, the recording start time and the end time are changed.

Fig. 7C illustrates a representative display pattern generated when the keys 66, 54 and 56 are pressed, respectively, as in steps S12, S14 and S16, indicating that the recording end time, the channel and the tape speed are further changed from the information displayed in Fig. 7B respectively.

## Claims

1. A video cassette recorder having
a) a tuner (20) for receiving a television broadcast program through a plurality of receiving channels,
b) a real time clock (15) for indicating time information, and
c) a timer-controlled preprogramming apparatus (10) for controlling the recording of a desired broadcast program,
said apparatus (10) including:
d) user operable means (52) for generating a signal indicative of a preprogramming commencement mode or a preprogramming completion mode when it is operated;
e) means (13) for storing, in response to a signal indicative of said preprogramming completion mode, preprogramming information and setting the video cassette recorder in a stand-by mode for preprogrammed recording;
f) means (11-13) for initializing, in response to a signal indicative of said preprogramming commencement mode, a set of preprogramming information designating
i) an initial recording channel,
ii) an initial recording start time, and
iii) an initial recording end time
wherein
f1) the initial recording start time is set to a current time indicated by the real time clock (15) and
f2) the initial recording end time is automatically determined by adding a predetermined duration of recording to the initial recording start time.

2. The video cassette recorder of claim 1, wherein the initializing means (11-13) are designed to set the initial recording channel to the channel of a broadcast program currently received by the tuner.

3. The video cassette recorder of claims 1 or 2, wherein the apparatus further includes means (54) for adjusting the initial recording channel to another channel.

4. The video cassette recorder of any of claims 1-3 further having a recording speed selector (65) for selecting a tape running speed, wherein the programming information further designates an initial recording tape speed.

5. The video cassette recorder of claim 4, wherein the apparatus further includes means (56) for adjusting the initial recording tape speed to another speed.

6. The video cassette recorder of any of claims 1-5 further having a power supply for supplying electric power to the video cassette recorder, wherein the apparatus further includes a rechargeable battery (46) coupled to the power supply for supplying a battery power to the real time clock (15) and the timer-controlled preprogramming apparatus (10) in case of a power failure.

7. A method for timer-controlled preprogramming of a video cassette recorder having a tuner for receiving a television broadcast program through a plurality of receiving channels, a real time clock for indicating time information, the method comprising the steps of:
- generating a signal indicative of preprogramming commencement mode upon actuation of a user operable means;
- generating a signal indicative of preprogramming completion mode upon actuation of said user operable means;
- storing, in response to a signal indicative of said preprogramming completion mode, preprogramming information and setting the video cassette recorder in a stand-by mode for the preprogrammed recording;
- initializing, in response to a signal indicative of said preprogramming commencement mode, a set of preprogramming information designating
i) an initial recording channel,
ii) an initial recording start time, and
iii) an initial recording end time
wherein
- the initial recording start time is set to a current time indicated by the real time clock and
- the initial recording end time is automatically determined by adding a predetermined duration of recording to the initial recording start time.

8. The method for timer-controlled preprogramming of a video cassette recorder of claim 7, further comprising the step of setting the initial recording channel to the channel of a broadcast program currently received by the tuner.

9. The method for timer-controlled preprogramming of a video cassette recorder of claims 7 or 8, further comprising the step of adjusting the initial recording channel to another channel.

10. The method for timer-controlled preprogramming of a video cassette recorder of any of claims 7-9, further comprising the step of initializing an initial recording tape speed.

11. The method for timer-controlled preprogramming of a video cassette recorder of claim 10, further comprising the step of adjusting the initial recording tape speed to another speed.

12. The video cassette recorder of any of claims 1-6, further comprising:
means (62, 64) for adjusting the initial recording start time to an actual start time of the desired broadcast program;
means (66, 68) for adjusting the recording end time when the length of the desired broadcast program is different from the predetermined duration of recording.

13. The method for timer-controlled preprogramming of a video cassette recorder of any of claims 7-11, further comprising the steps of:
- adjusting the initial recording start time to an actual start time of the desired broadcast program; and
- adjusting the initial recording end time when the length of the desired broadcast program is different from the predetermined duration of recording.

## Patentansprüche

1. Videokassettenrecorder mit
a) einem Tuner (20) zum Empfangen eines Fernsehprogramms über mehrere Empfangskanäle,
b) einer Echtzeituhr (15) zum Angeben von Zeitinformation, und
c) eine timer-gesteuerte Vorprogrammierungseinrichtung (10) zum Steuern der Aufnahme eines gewünschten Fernsehprogramms,
wobei die Einrichtung (10) aufweist:
d) vom Benutzer bedienbare Mittel (52) zum Erzeugen eines Signals, das einen Vorprogrammierungsstartmodus oder einen Vorprogrammierungsabschlußmodus angibt, wenn es bedient wird;
e) Mittel (13) zum Speichern von Vorprogrammierungsinformation und zum Setzen des Videokassettenrecorders in einen Standby-Modus für die vorprogrammierte Aufnahme in Antwort auf ein Signal, das den Vorprogrammierungsabschlußmodus angibt;
f) Mittel (11-13) zum Initialisieren in Antwort auf ein Signal, das den Vorprogrammierungstartmodus angibt, eines Satzes an Vorprogrammierungsinformation, die
i) einen anfänglichen Aufnahmekanal,
ii) eine anfängliche Aufnahmestartzeit, und
iii) eine anfängliche Aufnahmeendzeit
angibt, wobei
f1) die anfängliche Aufnahmestartzeit auf eine von der Echtzeituhr (15) angegebene augenblickliche Zeit gesetzt wird und
f2) die anfängliche Aufnahmeendzeit automatisch durch Addieren einer vorgegebenen Aufnahmedauer zu der anfänglichen Aufnahmestartzeit bestimmt wird.

2. Videokassettenrecorder nach Anspruch 1, bei welchem die Initialisierungsmittel (11-13) derart ausgelegt sind, den anfänglichen Aufnahmekanal auf den Kanal eines Fernsehprogramms zu setzen, das gegenwärtig von dem Tuner empfangen wird.

3. Videokassettenrecorder nach Anspruch 1 oder 2, bei welchem die Einrichtung ferner Mittel (54) zum Einstellen des anfänglichen Aufnahmekanals auf einen anderen Kanal aufweist.

4. Videokassettenrecorder nach einem der Ansprüche 1 bis 3, ferner mit einem Aufnahmegeschwindigkeitsauswähler (65) zum Auswählen einer Bandlaufgeschwindigkeit, wobei die Programmierungsinformation ferner eine anfängliche Aufnahmebandgeschwindigkeit festlegt.

5. Videokassettenrecorder nach Anspruch 4, bei welchem die Einrichtung ferner Mittel (56) zum Einstellen der anfänglichen Aufnahmebandgeschwindigkeit auf eine andere Geschwindigkeit aufweist.

6. Videokassettenrecorder nach einem der Ansprüche 1 bis 5, ferner mit einer Stromversorgung zum Liefern eines elektrischen Stroms an den Videokassettenrecorder, bei welchem die Einrichtung ferner eine wiederaufladbare Batterie (46) aufweist, die mit der Stromversorgung zum Bereitstellen einer Batterieversorgung an die Echtzeituhr (15) und die timer-gesteuerte Vorprogrammierungseinrichtung (10) im Falle eines Stromausfalls gekoppelt ist.

7. Verfahren für die timer-gesteuerte Vorprogrammierung eines Videokassettenrecorders, der einen Tuner zum Empfangen eines Fernsehprogramms über mehrere Empfangskanäle und eine Echtzeituhr zum Vorgeben einer Zeitinformation aufweist, wobei das Verfahren die Schritte umfaßt:
- Erzeugen eines Signals, das einen Vorprogrammierungsstartmodus angibt, bei Betätigung eines von einem Benutzer bedienbaren Mittels;
- Erzeugen eines Signals, das einen Vorprogrammierungsabschlußmodus angibt, bei Betätigung des von dem Benutzer bedienbaren Mittels;
- Speichern einer Vorprogrammierungsinformation und Setzen des Videokassettenrecorders in einen Standby-Modus für die vorprogrammierte Aufnahme in Antwort auf ein Signal, das den Vorprogrammierungsabschlußmodus angibt;
- Initialisieren in Antwort auf ein Signal, das den Vorprogrammierungsstartmodus angibt, eines Satzes an Vorprogrammierungsinformation, die
i) einen anfänglichen Aufnahmekanal,
ii) eine anfängliche Aufnahmestartzeit, und
iii) eine anfängliche Aufnahmeendzeit
angibt, wobei
- die anfängliche Aufnahmstartzeit auf eine von der Echtzeituhr angegebene augenblickliche Zeit gesetzt wird und
- die anfängliche Aufnahmeendzeit automatisch durch Addieren einer vorgegebenen Aufnahmedauer zu der anfänglichen Aufnahmestartzeit bestimmt wird.

8. Verfahren für die timer-gesteuerte Vorprogrammierung eines Videokassettenrecorders nach Anspruch 7, welches ferner den Schritt umfaßt, den anfänglichen Aufnahmekanal auf den Kanal eines Fernsehprogramms zu setzen, das gegenwärtig von dem Tuner empfangen wird.

9. Verfahren für die timer-gesteuerte Vorprogrammierung eines Videokassettenrecorders nach Anspruch 7 oder 8, welches ferner den Schritt umfaßt, den anfänglichen Aufnamekanal auf einen anderen Kanal einzustellen.

10. Verfahren für die timer-gesteuerte Vorprogrammmierung eines Videokassettenrecorders nach einem der Ansprüche 7 bis 9, welches ferner den Schritt umfaßt, die anfängliche Aufnahmebandgeschwindigkeit zu initialisieren.

11. Verfahren für die timer-gesteuerte Vorprogrammierung eines Videokassettenrecorders nach Anspruch 10, welches ferner den Schritt umfaßt, die anfängliche Aufnahmebandgeschwindigkeit auf eine andere Geschwindigkeit einzustellen.

12. Videokassettenrecorder nach einem der Ansprüche 1 bis 6, welcher ferner aufweist:
Mittel (62, 64) zum Einstellen der anfänglichen Aufnahmestartzeit auf eine tatsächliche Startzeit des gewünschten Fernsehprogramms;
Mittel (66, 68) zum Einstellen der Aufnahmeendzeit, falls die Länge des gewünschten Fernsehprogramms unterschiedlich zu der vorgegebenen Aufnahmedauer ist.

13. Verfahren für die timer-gesteuerte Vorprogrammierung eines Videokassettenrecorders nach einem der Ansprüche 7 bis 11, welches ferner die Schritte umfaßt:
- Einstellen der anfänglichen Aufnahmestartzeit auf eine tatsächliche Startzeit des gewünschten Fernsehprogramms; und
- Einstellen der anfänglichen Aufnahmeendzeit, falls die Länge des gewünschten Fernsehprogramms unterschiedlich zu der vorgegebenen Aufnahmedauer ist.

## Revendications

1. Magnétoscope comportant
a) un récepteur (20) destiné à recevoir une émission de télévision par l'intermédiaire d'une pluralité de canaux de réception,
b) une horloge en temps réel (15) destinée à indiquer des informations horaires, et
c) un dispositif de programmation préalable commandé par minuterie (10) destiné à commander l'enregistrement d'une émission désirée,
ledit dispositif (10) comportant :
d) des moyens pouvant être actionnés par l'utilisateur (52) destinés à générer un signal représentant un mode de début de programmation préalable ou un mode de fin de programmation préalable, lorsqu'ils sont actionnés ;
e) des moyens (13) destinés à stocker, en réponse à un signal représentant ledit mode de fin de programmation préalable, des informations de programmation préalable et à mettre le magnétoscope dans un mode d'attente d'enregistrement programmé à l'avance ;
f) des moyens (11-12) destinés à initialiser, en réponse à un signal représentant ledit mode de début de programmation préalable, un ensemble d'informations de programmation préalable désignant
i) un canal d'enregistrement initial,
ii) une heure de début d'enregistrement initial, et
iii) une heure de fin d'enregistrement initial
dans lequel
f1) l'heure de début d'enregistrement initial est fixée à une heure courante indiquée par l'horloge en temps réel (15), et
f2) l'heure de fin d'enregistrement initial est automatiquement déterminée en additionnant une durée d'enregistrement prédéterminée à l'heure de début d'enregistrement initial.

2. Magnétoscope selon la revendication 1, dans lequel les moyens d'initialisation (11-13) sont conçus pour positionner le canal d'enregistrement initial au canal d'une émission en cours de réception par le récepteur.

3. Magnétoscope selon les revendications 1 ou 2, dans lequel le dispositif comporte en outre des moyens (54) pour régler le canal d'enregistrement initial à un autre canal.

4. Magnétoscope selon l'une quelconque des revendications 1 à 3, comportant en outre un sélecteur de vitesse d'enregistrement (65) destiné à sélectionner une vitesse de défilement de bande, dans lequel les informations de programmation désignent en outre une vitesse de bande d'enregistrement initial.

5. Magnétoscope selon la revendication 4, dans lequel le dispositif comporte en outre des moyens (56) pour régler la vitesse de bande d'enregistrement initial à une autre vitesse.

6. Magnétoscope selon l'une quelconque des revendications 1 à 5, comportant en outre une alimentation destinée à délivrer de l'énergie électrique au magnétoscope, dans lequel le dispositif comporte en outre une batterie rechargeable (46) couplée à l'alimentation pour délivrer de l'énergie de la batterie à l'horloge en temps réel (15) et au dispositif de programmation préalable commandé par minuterie (10) en cas de défaut d'alimentation.

7. Procédé pour programmation préalable commandée par séquenceur d'un magnétoscope comportant un récepteur destiné à recevoir une émission de télévision par l'intermédiaire d'une pluralité de canaux de réception, une horloge en temps réel destinée à indiquer des informations horaires, le procédé comprenant les étapes consistant à :
générer un signal représentant un mode de début de programmation préalable lors de l'actionnement de moyens pouvant être actionnés par l'utilisateur ;
générer un signal représentant un mode de fin de programmation préalable lors de l'actionnement desdits moyens pouvant être actionnés par l'utilisateur ;
stocker, en réponse à un signal représentant ledit mode de fin de programmation préalable, des informations de programmation préalable et le positionnement du magnétoscope dans un mode d'attente pour l'enregistrement programmé à l'avance ;
initialiser, en réponse à un signal représentant ledit mode de début de programmation préalable, un ensemble d'informations de programmation préalable désignant
i) un canal d'enregistrement initial,
ii) une heure de début d'enregistrement initial, et
iii) une heure de fin d'enregistrement initial
dans lequel
l'heure de début d'enregistrement initial est fixée à une heure courante indiquée par l'horloge en temps réel, et
l'heure de fin d'enregistrement initial est automatiquement déterminée en additionnant une durée d'enregistrement prédéterminée à l'heure de début d'enregistrement initial.

8. Procédé pour programmation préalable commandée par séquenceur d'un magnétoscope selon la revendication 7, comprenant en outre l'étape consistant à positionner le canal d'enregistrement initial au canal d'une émission en cours de réception par le récepteur.

9. Procédé pour programmation préalable commandée par séquenceur d'un magnétoscope selon les revendications 7 ou 8, comprenant en outre l'étape consistant à régler le canal d'enregistrement initial à un autre canal.

10. Procédé pour programmation préalable commandée par séquenceur d'un magnétoscope selon l'une quelconque des revendications 7 à 9, comprenant en outre l'étape consistant à initialiser une vitesse de bande d'enregistrement initial.

11. Procédé pour programmation préalable commandée par séquenceur d'un magnétoscope selon la revendication 10, comprenant en outre l'étape consistant à régler la vitesse de bande d'enregistrement initial à une autre vitesse.

12. Magnétoscope selon l'une quelconque des revendications 1 à 6, comprenant en outre :
des moyens (62, 64) pour régler l'heure de début d'enregistrement initial à l'heure de début réelle de l'émission désirée ;
des moyens (66, 68) pour régler l'heure de fin d'enregistrement lorsque la longueur de l'émission désirée est différente de la durée d'enregistrement prédéterminée.

13. Procédé pour programmation préalable commandée par minuterie d'un magnétoscope selon l'une quelconque des revendications 7 à 11, comprenant en outre les étapes consistant à :
régler l'heure de début d'enregistrement initial à l'heure de début réelle de l'émission désirée ; et
régler l'heure de fin d'enregistrement lorsque la longueur de l'émission désirée est différente de la durée d'enregistrement prédéterminée.
